# EUROPÄISCHE PATENTSCHRIFT

(11) **EP 1 697 273 B1**
(45) Veröffentlichungstag und Bekanntmachung des Hinweises auf die Patenterteilung: **05.09.2007**
(21) Anmeldenummer: 04820048.9
(22) Anmeldetag: 03.11.2004
(51) Int. Cl.: C04B 20/00, C04B 26/12, C04B 14/30, C04B 14/24, C04B 14/06

(54) **HERSTELLUNG VON FÜLLSTOFFHALTIGEN AEROGELEN**
PRODUCTION OF AEROGELS CONTAINING FILLERS
PRODUCTION D'AEROGELS CONTENANT UNE CHARGE

(30) Priorität: 10.12.2003 DE 10357539
(43) Veröffentlichungstag der Anmeldung: 06.09.2006
(73) Patentinhaber: DLR Deutsches Zentrum für Luft- und Raumfahrt e.V., 53175 Bonn (DE)
(72) Erfinder: RATKE, Lorenz, 53757 St. Augustin (DE); BRÜCK, Sabine, 52351 Düren (DE)
(74) Vertreter: Jönsson, Hans-Peter
(86) Internationale Anmeldenummer: PCT/EP2004/012402
(87) Internationale Veröffentlichungsnummer: WO 2005/056643

(56) Entgegenhaltungen:
- DE-A- 19 533 564
- US-A- 6 083 619

## Beschreibung

Gegenstand der Erfindung ist ein Verfahren zur Herstellung eines Füllstoff-enthaltenden Aerogels mit extrem geringer Wärmeleitfähigkeit.

Gießen in keramischen Formschalen und Formen aus gebundenen Sanden ist eine Standardgusstechnik, um Präzisionsteile aus verschiedensten Legierungen, insbesondere von Aluminium, Magnesium, Titan oder Graugusslegierungen herzustellen. Mittels moderner Gussverfahren ist es möglich, konturgerecht und endformnah zu gießen (J. Sprunk, W. Blank, W. Grossmann, E. Hauschild, H. Rieksmeier, H.G. Rosselnbruch; Feinguß für alle Industriebereiche, 2. Auflage, Zentrale für Gussverwendung, Düsseldorf 1987; K.A. Krekeler, Feingießen, in: Handbuch der Fertigungstechnik Bd. 1., Herausgeber: G. Speer, Hanser Verlag, München 1981; W. Tilch, E. Flemming, Formstoffe und Formverfahren, Dt. Verlag für Grundstoffindustrie, Leipzig/Stuttgart 1993).

Der Stand in der Kernfertigung ist ebenso wie bei den Formverfahren durch eine Vielzahl von Kernformverfahren einschließlich verschiedenartiger Bindersystem und Ausrüstungen gekennzeichnet. Gießereien, die eine große Modellpalette haben, müssen verfahrensbedingt oftmals mehrere Verfahren nebeneinander anwenden. Der Schwerpunkt in der Entwicklung neuer Kernbinder- bzw.

Kernformstoffe liegt in der Verbesserung der spezifischen Festigkeit von Formstoffen bei gleichzeitiger Verringerung des Binderanteils, um so die wirtschaftlichen und ökologischen Ressourcen zu schonen.

Bei Aluminiumguss treten beim Entkernen einige spezielle Probleme auf, die beim Eisenguss unbekannt sind. Die tieferen Gießtemperaturen von Aluminium erzeugen im Kernsand nur niedrigere Temperaturen, so dass die thermische Zerstörung des Binders schwächer ist. Aufgrund dieser geringen Zerstörung der Binderbrücken behalten die Kerne nach dem Giessen eine höhere Festigkeit und lassen sich schwierig durch mechanische Vibration ausleeren. Besonders bei engen Hohlräumen ist oft ein zusätzlicher Zeit- und Arbeitsaufwand zur vollständigen. Entfernung des Kernsandes erforderlich, wodurch die Kosten steigen.

Dünnwandige Gussteile, die sich beim Entkernungsversuch verziehen oder verbiegen können, stellen ebenso wie ein hohes Sand-Metall-Verhältnis ein Problem dar, das gelöst werden muss. Das Ausleerverhalten von organisch gebundenen Kernen beim Aluminiumguss hängt von ihrer mechanischen Festigkeit abhängt. In dem Masse wie die Festigkeit der Kerne zunahm, verschlechterte sich das Ausleerverhalten. Der übliche Weg, um eine gute Entkernbarkeit zu erzielen, führt zu geringeren Binderanteilen. Die Kerne lassen sich dann einfacher entfernen. Gleichzeitig aber verschlechtert sich die Stabilität des Kernes, so dass bereits im Vorfeld eines Abgusses Probleme wie Kernbruch oder Kernverzug auftreten können. Die Sandkörner können nur bis zu einer gewissen Minimalgrenze ausreichend vom Binder umhüllt werden, so dass eine vollständige Härtung schwierig ist. Eine Vielzahl von Möglichkeiten wurde erprobt um das Problem der vollständigen und sauberen Kernentfernung zu lösen, beispielsweise durch eine Variation der Binderarten und der Binderanteile. Diese Versuche waren nicht in allen Fällen erfolgreich. Oft musste ein ganzer Prozessschritt in der Gussteilfertigung neu definiert werden. Dies führte zu zusätzlichen Kosten für Investitionen, Energie und Arbeit. Wenn es gelänge, die Kerne ohne zusätzliche Maßnahmen, mindestens aber mit deutlich weniger Kosten sicher zu entfernen, könnte die Produktivität einer Gießerei gesteigert werden. Aus ökologischen Gesichtspunkten sollte darüber hinaus die selektive Rückführbärkeit der Formstoffe aus den Formstoffkreisläufen und ihre Rezyklierung Schwerpunkt der Entwicklungsarbeiten sein.

Um zu verstehen, wie die Zerstörung und Ausleerung des Kerns ablaufen, muss nicht nur die Herstellung der Kerne und Formen betrachtet werden, sondern auch, wie sie ihre Festigkeit und ihre thermischen Eigenschaften erlangen. Die Mechanisierung der Kernfertigung setzte neue Maßstäbe, sowohl für die Einzelkernfertigung, als auch für die maschinelle Serienfertigung. Mit der Verwendung von Bindemittel auf Kunstharzbasis wurde die organochemische Kerntechnologie eingeleitet. Sie wurde 1943 von Croning vorgestellt, der erstmals ein Harz-Sandgemisch verwendete. Im Zuge ihrer Weiterentwicklung konnten eine Vielzahl von Bindersystemen, bevorzugt auf Kunstharzbasis, vorgestellt werden. Die Entwicklungsanforderungen, die an organische Bindersysteme gestellt werden, sind mannigfaltig. Qualitativ hochwertige organische Bindersysteme müssen heutzutage die Anforderungen an die Gussstückqualität und damit an Maßgenauigkeit und Formqualität erfüllen. Von ihnen wird eine hohe spezifische Festigkeit in Verbindung mit einem verminderten Binderanteil in der Formstoffmischung gefordert. Die Viskosität des Binders darf nicht zu hoch sein, denn nur so kann eine gute Dosierung und damit gute Verarbeitung gewährleistet sein. Die Kornoberfläche lässt sich zudem besser vernetzen, so dass eine ausreichend hohe Festigkeit erzielt werden kann. Die Empfindlichkeit gegenüber Parametern, die auf die Dosierung und Verfestigung Einfluss nehmen, sollte nur gering und auch ein guter Kernzerfall sollte gewährleistet sein. Wirtschaftliche und ökologische Gesichtspunkte, wie die Vermeidung einer Schadstoffentwicklung während der Verarbeitung und dem Giessen und günstige Bedingungen hinsichtlich des material- und energiewirtschaftlichen Einsatzes, sollten ebenfalls berücksichtigt werden. Die hier genannten Forderungen haben zu einer Verfahrensentwicklung mit neuen Bindersystemen und entsprechenden Ausrüstungen geführt.

Wie oben ausgeführt gibt es verschiedene Verfahren in den Gießereien, um verlorene Formen und Kerne herzustellen. Im Bereich des Sandgusses kann zwischen kunstharzgebundenen und anorganisch gebundenen Sanden unterschieden werden. Im Bereich des Feingusses werden keramische Formschalen eingesetzt und organisch gebundene Sandkerne.

Wesentliche Probleme aller Arten von Kern- und Formwerkstoffen sind :
a) Entkernung, d.h. möglichst einfache, vollständige, rückstandfrei Entfernung des Kerns aus dem Gussstück
b) Kerne müssen hohe thermische Belastungen aushalten. Sie dürfen sich beim Abguss nicht verziehen, brechen oder sonst wie verformen.
c) Die Erstarrung des Gussstückes muss am Kern beginnen, da hier sonst Lunker entstehen
d) Die Kernwerkstoffe müssen so fest sein, dass sie die hydrodynamischen Belastungen (Scherspannungen durch viskose Kräfte des einströmenden Metalls dürfen nicht zur Ablösung von Sandkörnern und Sandschichten führen) sowie thermische Spannungen und Schrumpfspannungen beim Giessen und Erstarren aushalten.
e) Beim Abguss dürfen aus dem Kern- und Formstoff keine Gase austreten, die entweder im Metall zu Gussporen führen oder aber die Gussoberfläche schädigen (Gasstoß)
f) Kern- wie Formwerkstoffe dürfen chemisch nicht mit dem Gießmetall reagieren

Kerne werden heute auf so genannten Kernschiessmaschinen hergestellt, d.h. eine fließfähige Masse aus Sand und Binder wird unter hohem Druck in die Kernform geschossen und dann durch Zusatz eines Härters ausgehärtet (die Härtung kann durch Zusatz einer Chemikalie erfolgen oder durch sondern Schiessen in eine vorgewärmte Form oder eine Mikrowelle eingeleitet werden). Die Herstellungszeiten für Kerne liegen heute im Sekundenbereich, wenn es um Massenprodukte geht, sonst im Minutenbereich.

Die heute zur Verfügung stehenden Form- und Kernwerkstoffe erfüllen im allgemeinen diese Anforderungen, aber es gibt immer wieder Probleme in bestimmten Anwendungsbereichen, so z.B. im Titanguss, wo es kaum Kernwerkstoffe gibt, die nicht mit dem Metall reagieren, so im Aluminiumguss, bei dem vor allem die Entkernung komplex geformter Kerne (z.B. Hinterschneidungen) erhebliche Probleme bereitet. Zudem gibt es im Bereich der Formstoffe Probleme, da es kaum Sand-Bindersysteme gibt, die es ermöglichen, dünnwandig zu gießen. Ursache hierfür ist, dass die heutigen Formstoffsysteme eine so hohe Wärmeleitfähigkeit besitzen, dass das Gießmetall in dünnwandigen Formbereichen nicht mehr ausläuft.

Hohlräume innerhalb der Gussform müssen mittels eines Kernes stabil vorgeformt werden. Solche Kerne werden in der Regel wegen der dort herrschenden hohen thermischen und mechanischen Belastung aus kunststoffgebundenen keramischen Pulvern hergestellt. Nachteil der heute üblichen Verfahren zur Kernherstellung ist, dass die Entfernung der Kerne aus dem Gussstück nur mit extrem hohen Aufwand möglich ist (z.B. Verbrennung, Hochdruckwasserstrahlen), die Verteilung der Sande im Kern inhomogen ist und Risskeime existieren, die unter anderem zum Bruch unter thermisch-mechanischer Belastung führen können.

Aerogele sind hochporöse, offenporige oxidische Festkörper, die in der Regel über Sol-Gel-Verfahren aus Metallalkoxiden durch Polymerisation, Polykondensation zu Gelen und anschließender überkritischer Trocknung gewonnen werden. Seit einigen Jahren ist es gelungen, auch Kunststoffe über Sol-Gel-Verfahren zu gelieren und durch überkritische Trocknung in einen hochporösen organischen Festkörper umzuwandeln (siehe beispielsweise DE 195 23 382 A1, DE 694 09 161 T2 und US-A-5,086,085). Pyrolyse solcher Kunststoffaerogele unter Schutzgas oder im Vakuum bei Temperaturen oberhalb 1000°C wandelt diese in Kohlenstoffaerogele um. Wie die oxidischen Aerogele, haben Kunststoff- und Kohlenstoffaerogele extrem geringe effektive Wärmeleitfähigkeiten (Größenordnung einige Wm⁻¹K⁻¹) und sind erheblich leichter. Die physikalischen und mechanischen Eigenschaften von Kunststoff- und Kohlenstoffaerogelen sind in der Literatur dokumentiert (R.W. Pekala, C.T. Alviso, F.M. Kong, S.S. Hulsey; J. Non-Cryst. Solids 145 (1992) 90; R.W. Pekala, C.T. Alviso, Mat. Res. Soc. Symp. Proc. 270 (1992) 3; R. Petricevic, G. Reichenauer, V. Bock, A. Emmerling, J. Fricke; J.Non-Cryst.Solids (1998)). Sie lassen sich durch die Ausgangsstoffe, ihr Gemisch und das Herstellungsverfahren in weiten Grenzen variieren.

EP 1 077 097 A1 beschreibt die Verwendung von Kunststoff/Kohlenstoff-Aerogelen als Kernwerkstoff. Das hier beschriebene Aerogel kann bis zu 60 % Füllstoff enthalten. Die Fertiggelierzeit beträgt mindestens einen Tag. In der DE 196 06 114 A1 werden verschiedene Fasern als Füllmaterial für Aerogele beschrieben.

DE 21 23 632 C beschreibt Gießereikerne, die aus porösem Kohlenstoff bestehen, der durch Carbonisierung von Kunststoffschaum erhalten wird. Diese Kerne enthalten keine Füllstoffe.

DE 30.04 466 A1 beschreibt die Herstellung eines Gießereikerns aus einem Gemisch von Phenol-Formaldehydharz und Kohlenstoffpartikeln. Diese Partikel machen 99,5 % des Kerns aus.

US 4,032,105 B beschreibt Gießereikerne, die aus Kohlenstoffschaum bestehen. Diese Kerne enthalten keine Füllstoffe.

JP 04081243 A beschreibt Gießereikerne, die aus Kohlenstoffschaum bestehen. Diese Kerne enthalten ebenfalls keine Füllstoffe.

EP 0 875 905 B1 beschreibt Aerogele, die mit organischen Monomeren gefüllt sind.

US 5,569,513 B beschreibt Aerogele, die mit Polyester- oder Glasfasern gefüllt sind, wobei dieses Glas typischerweise eine Wärmeleitfähigkeit von etwa 1.3 Wm⁻¹K⁻¹ besitzt.

WO 97/17308 A1 beschreibt Aerogele, die mit Glasfasern gefüllt sind.

DE 196 06 114 A1 beschreibt Aerogele, die ebenfalls mit Glasfasern gefüllt sein können.

WO 03/09227 A1 beschreibt füllstoffhaltige Aerogele, bei denen die Wärmeleitfähigkeit des Endprodukts zwischen 6,045 und 0,5 Wm⁻¹K⁻¹ beträgt. Hierbei werden Aerogelpartikel mit den Füllstoffen mit Hilfe eines Binders verfestigt der kein Aerogel ist. Der Anteil der Füllstoffe an der Gesamtmischung beträgt etwa 10 bis 24 Gew.-%.

DE 195 33 564 A1 beschreibt ein Verbundmaterial aus Aerogelpartikeln mit mindestens einem Bindemittel und mindestens einem Fasermaterial. Die Wärmeleitfähigkeit des Verbundmaterials beträgt 0,01 bis 0,1 Wm⁻¹K⁻¹.

US 6,083,619 A beinhaltet Aerogelpartikel, die in ein anorganisches Matrixmaterial eingebettet sind, mit einer Wärmeleitfähigkeit des Gesamtformkörpers von 0,4 Wm⁻1K⁻¹.

Der Nachteil des oben beschriebenen Standes der Technik im Hinblick auf diese Anwendung ist die organische Natur der eingesetzten Füllstoffe und die damit verbundene geringe Temperaturstabilität oder die zu hohe Wärmeleitfähigkeit der eingesetzten Füllstoffe.

Es ist daher die Aufgabe der vorliegenden Erfindung, Aerogel-enthaltene Formkörper zur Verfügung zu stellen, die Füllstoffe enthalten, die eine möglichst geringe Wärmeleitfähigkeit besitzen.

Die vorgenannte Aufgabe wird in einer ersten Ausführungsform gelöst durch Aerogel-Formkörper enthaltend **anorganischen**, Hohlkugeln enthaltenden Füllstoff mit einer Wärmeleitfähigkeit von bis zu 0,5 Wm⁻¹K¹.

Insbesondere eignet sich als Aerogel ein Silica-Aerogel, ein Kunststoff-Aerogel oder organisches Aerogel, insbesondere ein Resorcinol/Formaldehyd-Aerogel (RF-Aerogel). Dies ist besonders vorteilhaft, da Kunststoff-Aerogele auf Basis Resorcinol/Formaldehyd bei geeigneter Zusammensetzung und geeignetem Gehalt an basischen Katalysator bei Temperaturen zwischen 20 und 50 °C ohne überkritisches Trocknen in ein mikrostrukturiertes Kunststoff-Aerogel überführt werden können. Durch Auswahl der Zusammensetzung ist die Gelierungsreaktion so einstellbar, dass beispielsweise zunächst eine hochviskose Flüssigkeit entsteht, die mit der Zeit/Temperatur fester wird. Dementsprechend ist der Einsatz eines zusätzlichen Binders erfindungsgemäß nicht erforderlich, so dass die erfindungsgemäßen Formkörper vorzugsweise nur aus dem Material des Aerogels und dem anorganischen Füllstoff besteht.

Hohlkugeln sind geeignet, da diese eine besonders niedrige Wärmeleitfähigkeit besitzen. Bevorzugt bestehen diese Hohlkugeln aus Glas, da dieses Material ausreichend temperaturbeständig ist. Insgesamt ist es besonders vorteilhaft, wenn die Wärmeleitfähigkeit der Füllstoffe bis zu 0,1 Wm⁻¹K⁻¹ beträgt und/oder der Volumenanteil des Füllstoffes zwischen 70% und 90% liegt. Als besonders vorteilhaft hat es sich herausgestellt, wenn die Wärmeleitfähigkeit des Formkörpers kleiner als die Wärmeleitfähigkeit des Füllstoff-freien Aerogels ist.

Bindet man Hohlkugeln (Scotchlite^{™} von 3M^{™} oder e-spheres^{™} von Envirospheres^{™}) mit konventionellen Bindern, so beträgt der Binderanteil in der Größenordnung 0,5 bis 1 Vol%. Das bedeutet bei den glatten Oberflächen der Kugeln, dass die Festigkeit des Form- und Kernwerkstoffes sehr gering ist, verglichen mit massiven Sanden aus Quarz oder Alodur^{™}, die mit der gleichen Menge Binder abgebunden werden, aber eine raue Oberfläche und kantige, splittrige Form besitzen. Diese Werkstoffe wurden bisher noch nicht in der Gießereitechnik eingesetzt. Des Weiteren ist der Effekt auf die Wärmeleitfähigkeit des Formstoffes nicht der, den z.B. 3M^{™} in seinen Datenblättern für Epoxyharze mit Glashohlkugeln als Füllstoff beschreibt. Denn werden die Hohlkugeln als Füllstoff eingesetzt, ist die Matrix ein dichter Kunststoff und die Wärmeleitfähigkeit wird im Wesentlichen durch die Matrix bestimmt, mit einem kleinen Einfluss des Füllstoffes. In einem Formstoff aus Hohlkugeln mit konventionellen Bindern (Phenol-, Furan-, Epoxyharze) gebunden, sind die Hohlkugeln kein Füllstoff mehr, sondern eher die Matrix, da sie zwischen 70 und 90% des Volumens einnehmen. Der Binder ist an sich eine für die Wärmeleitfähigkeit des Gesamtwerkstoffes unwesentliche Größe. Die Wärmeleitfähigkeit eines solchen Stoffes wird bestimmt durch zwei Effekte: Festkörperwärmeleitfähigkeit der Hohlkugeln über die Kontaktstellen der Kugeln und konvektiver Wärmetransport durch die Luft im Porenraum des Hohlkugelagglomerats. Der erste Effekt entspricht der Wärmeleitfähigkeit des reinen Hohlkugelagglomerates, der für e-spheres^{™} angegeben wird mit ca. 0,1 Wm⁻¹K⁻¹ und für 3M^{™}-Hohlkugeln zu ca. 0,05 Wm⁻¹K⁻¹ abgeschätzt werden kann. Der Wärmetransport durch die Hohlräume im Agglomerat kann abgeschätzt werden. Die Poren haben bei Packungsdichten zwischen 70 und 90% einen Durchmesser von 0,7-fachen bis 0,5-fachen des mittleren Teilchendurchmessers. Sie sind also makroskopisch groß, d.h. im Bereich um ca. 50 bis 100 µm. Wärmetransport in den Poren kann also durch konvektiven Wärmetransport über die Gasphase in den Poren beschrieben werden. Ein typischer Wert für die Wärmeübergangszahl von ruhender Luft ist ca. 30 Wm⁻¹K⁻¹. Bei Formstoffdicken von 1 bis 10 cm ergibt sich daraus eine effektive Wärmeleitfähigkeit von 0,1 bis 1 Wm⁻¹K⁻¹ (bei 30% Porenvolumen). Das bedeutet, der Wärmetransport in einem Formstoff aus Hohlkugeln würde im Wesentlichen durch die Gasphase und nicht durch die Hohlkugeln bestimmt werden. Da Hohlkugeln von konventionellen Bindern schlecht gebunden werden, ergibt sich somit kein technischer Vorteil, Hohlkugeln als Formgrundstoff für übliche Gießereianwendungen zu verwenden.

Erst die Verwendung von Aerogelen als Bindermaterial ändert die Situation. Der Porenraum zwischen den Hohlkugeln wird vollständig ausgefüllt durch das Aerogel, so dass kein freier Raum zwischen den Teilchen existiert, in dem Wärmetransport über die Gasphase erfolgen kann. Da die Aerogele eine Nanostruktur aufweisen, erfolgt in ihrem Porenraum kein Wärmetransport über Konvektion. Die Wärmeleitfähigkeit eines Verbundes Hohlkugel/Aerogel wird bestimmt durch die Wärmeleitfähigkeit des Aerogels. Sie ist aber insgesamt kleiner als die des Aerogels, da die Hohlkugeln jetzt trotz ihres hohen Volumenanteils ein Füllstoff sind und eine niedrigere Wärmeleitfähigkeit als die Aerogele selbst besitzen. Da die Hohlkugeln durch das Aerogel vollständig umschlossen werden (bei hohen Aerogelbinderanteilen) haben diese Formstoffe auch eine ausreichende Festigkeit.

Überraschenderweise ist bei den Versuchen mit Hohlkugeln (Kunststoffe, Glas, Keramik) gefunden worden, dass die Wärmeleitfähigkeit des Verbundes mit Aerogelen kleiner ist als die der Füllstoffe und des unter denselben Prozessbedingungen hergestellten reinen Aerogels (dies widerspricht an sich den Mischungsregeln für Verbundwerkstoffe).

Das Aerogel bildet eine deutlich andere Struktur im Porenraum zwischen den Füllstoffpartikeln aus. Die Aerogelteilchen, insbesondere RF-Aerogelteilchen sind etwa 10mal kleiner, das Netzwerk filigraner und die spezifische Oberfläche erheblich größer. Würde man einen Aerogelkörper mit dieser Struktur herstellen, hätte er eine sehr geringe Wärmeleitfähigkeit im Bereich von etwa 10 bis 50 Wm⁻¹K⁻¹. Die feine Struktur des Aerogels in den Zwickeln der Sand- und Hohlkugelkörper entspricht in etwa der Struktur von Aerogelen, insbesondere RF-Aerogelen, die überkritisch getrocknet werden müssen. Diese haben eine ca. 10 bis 50mal kleinere Wärmeleitfähigkeit als die unterkritisch getrockneten Aerogelen, insbesondere RF-Aerogele. Das heißt, dass ein wesentliches Element der erfindungsgemäßen füllstoffhaltigen Aerogelen ist, dass die Gelnetzwerkbildung in den kleinen Porenräumen der Füllstoffe ähnlich abläuft wie in Aerogelen, die mit einer großen Menge an Katalysator hergestellt und überkritisch getrocknet werden. Mit dieser Erkenntnis kann man dann auch wieder die klassischen Mischungsregeln für Verbundwerkstoffe für die Wärmeleitfähigkeit anwenden.

In einer weiteren Ausführungsform wird die Aufgabe der vorliegenden Erfindung gelöst durch ein Verfahren zur Herstellung eines Aerogels, umfassend die folgenden Schritte:
a. Herstellung eines Sols,
b. Mischung des Sols mit dem Füllstoff,
c. Gelierung des Sols zu einem Gel und
d. Trocknung des Gels.

Dieses Verfahren ist besonders vorteilhaft, wenn das resultierende Aerogel, beispielsweise ein Kunstoff-Aerogel zu einem Kohlenstoff-Aerogel, pyrolisiert wird. Dadurch wird unter anderem eine erhöhte Temperaturstabilität erreicht.

### Ausführungsbeispiel:

### Allgemeines

- E-Spheres^{™}: Keramische Hohlkugeln der Firma Envirospheres^{™}
- Alodur^{™}: Schleifmittel aus Al₂O₃ Schmelze von der Treibacher Schleifmittel^{™} Corp.
- Scotchlite^{™}: Glashohlkugeln von 3M^{™}

### Beispiel 1

22 g Resorcinol, 20 ml Formaldehyd-Lösung (37 Vol% in Wasser), 0,014 g Na₂CO₃ und 82 ml H₂O werden bei Raumtemperatur zu einem Resorcinol/Formaldehyd-Sol verrührt und anschließend 5 Tage gealtert. E-spheres^{™} Hohlkugeln mit Korngrößen von 20 bis 200 µm wurden in einem Mischer mit dem gealterten RF-Sol in einem Mengenanteil von 10 Vol.-% vermischt und bei 40 °C unter Luftabschluss getrocknet. Die gemessene Wärmeleitfähigkeit hatte einen Wert von 0,29 Wm⁻¹K⁻¹.

### Beispiel 2

22 g Resorcinol, 20 ml Formaldehyd-Lösung (37 Vol% in Wasser), 0,014 g Na₂CO₃ und 82 ml H₂O werden bei Raumtemperatur zu einem Resorcinol/Formaldehyd-Sol verrührt und anschließend 5 Tage gealtert. E-spheres^{™} Hohlkugeln mit Korngrößen von 20 bis 200 µm wurden in einem Mischer mit dem gealterten RF-Sol in einem Mengenanteil von 30 Vol% vermischt und bei 40 °C unter Luftabschluss getrocknet. Die gemessene Wärmeleitfähigkeit hatte einen Wert von 0,27 Wm⁻¹K⁻¹.

### Vergleichsbeispiel:

Reines RF-Aerogel gemäß Beispiel 1 wurde hergestellt. Es ergab sich eine Wärmeleitfähigkeit von 0,35 Wm⁻¹K⁻¹. Der weitere Vergleich zur Veredlung von Alodur^{™}, Quarz und SiC Sand zeigte, dass diese eine deutlich höhere Wärmeleitfähigkeit aufweisen. Bei gefüllten Aerogelen mit Alodur^{™} Sand mit einer Korngröße von 45 bis 75 µm und einem RF-Anteil von 4 Vol% lag die Wärmeleitfähigkeit bei etwa 0,63 Wm⁻¹K⁻¹, bei einem RF-Anteil von 24 Vol% verringerte sich dieser Wert auf 0,53 Wm⁻¹K⁻¹. Im Mittel wurde bei diesem Sand auch bei steigender Korngröße ein Wert von etwa 0,5 Wm⁻¹K⁻¹ erzielt. Ähnliches galt für den Quarzsand. Bei Siliziumcarbid wurden im Mittel bei einer vergleichbaren Korngröße Werte von etwa 1 Wm⁻¹K⁻¹ und mehr für die Wärmeleitfähigkeit gemessen.

### Daten zur Wärmeleitfähigkeit:

| | |
|---|---|
| Reines RF-Aerogel (hergestellt analog Vergleichsbeispiel) | 0, 35 Wm⁻¹K⁻¹ |
| e-spheres^{™} | 0,1 Wm⁻¹K⁻¹ |
| Glashohlkugeln (Typ Scotchlite^{™}) | ca. 0,05 Wm⁻¹K⁻¹ |

## Patentansprüche

1. Aerogel-Formkörper enthaltend anorganischen, Hohlkugeln enthaltenden Füllstoff mit einer Wärmeleitfähigkeit von bis zu 0,5 Wm⁻¹K⁻¹.

2. Aerogel-Formkörper gemäß Anspruch 1, **dadurch gekennzeichnet, dass** das Aerogel ein Silica-Aerogel, ein Kohlenstoff-Aerogel oder ein organisches Aerogel, insbesondere ein Resorcinol/Formaldehyd Aerogel ist.

3. Aerogel-Formkörper gemäß Anspruch 1, **dadurch gekennzeichnet, dass** die Hohlkugeln aus Glas bestehen.

4. Aerogel-Formkörper gemäß Anspruch 1, **dadurch gekennzeichnet, dass** die Wärmeleitfähigkeit des Füllstoffs bis zu 0,1 Wm⁻¹K⁻¹ beträgt.

5. Aerogel-Formkörper gemäß Anspruch 1, **dadurch gekennzeichnet, dass** das Aerogel Füllstoff in einer Menge von 70 Vol.-% bis 90 Vol.-% enthält.

6. Aerogel-Formkörper gemäß Anspruch 1, **dadurch gekennzeichnet, dass** die Wärmeleitfähigkeit des Formkörpers kleiner als die Wärmeleitfähigkeit des Füllstoff-freien Aerogels ist.

7. Verfahren zur Herstellung eines Aerogel-Formkörper, gemäß einem der Ansprüche 1 bis 6, umfassend die folgenden Schritte:
a. Herstellung eines Sols,
b. Mischung des Sols mit dem Füllstoff,
c. Gelierung des Sols zu einem Gel, und
d. Trocknung des Gels.

8. Verfahren gemäß Anspruch 7, **dadurch gekennzeichnet, dass** man den resultierenden Aerogel-Formkörper pyrolisiert.

## Claims

1. An aerogel molded part containing an inorganic filler containing hollow spheres and having a thermal conductivity of up to 0.5 Wm⁻¹K⁻¹.

2. The aerogel molded part according to claim 1, **characterized in that** said aerogel is a silica aerogel, a carbon aerogel or an organic aerogel, especially a resorcinol/formaldehyde aerogel.

3. The aerogel molded part according to claim 1, **characterized in that** said hollow spheres consist of glass.

4. The aerogel molded part according to claim 1, **characterized in that** the thermal conductivity of the filler is up to 0.1 Wm⁻¹K⁻¹.

5. The aerogel molded part according to claim 1, **characterized in that** said aerogel contains a filler in an amount of from 70% to 90% by volume.

6. The aerogel molded part according to claim 1, **characterized in that** the thermal conductivity of the molded part is lower than the thermal conductivity of the filler-free aerogel.

7. A process for the preparation of an aerogel molded part according to any of claims 1 to 6, comprising the following steps:
a. preparation of a sol;
b. mixing the sol with a filler;
c. gelling of the sol into a gel; and
d. drying of the gel.

8. The process according to claim 7, **characterized in that** the resulting aerogel molded part is pyrolyzed.

## Revendications

1. Pièce moulée en aérogel contenant une charge inorganique contenant des sphères creuses et ayant une conductibilité thermique allant jusqu'à 0,5 Wm⁻¹K⁻¹.

2. Pièce moulée en aérogel selon la revendication 1, **caractérisée en ce que** ledit aérogel est un aérogel de silice, un aérogel de carbone ou un aérogel organique, notamment un aérogel de résorcinol/formaldéhyde.

3. Pièce moulée en aérogel selon la revendication 1, **caractérisée en ce que** lesdites sphères creuses consistent en du verre.

4. Pièce moulée en aérogel selon la revendication 1, **caractérisée en ce que** la conductibilité thermique dudit charge atteint jusqu'à 0,1 Wm⁻¹K⁻¹.

5. Pièce moulée en aérogel selon la revendication 1, **caractérisée en ce que** ledit aérogel contient de la charge dans une quantité allant de 70% en volume à 90% en volume.

6. Pièce moulée en aérogel selon la revendication 1, **caractérisée en ce que** la conductibilité thermique de ladite pièce moulée est plus basse que la conductibilité thermique du aérogel exempt de charge.

7. Procédé pour la préparation d'une pièce moulée en aérogel selon l'une quelconque des revendications 1 à 6, comprenant les étapes suivantes:
a. la préparation d'un sol;
b. le mélange dudit sol avec ladite charge;
c. la gélification dudit sol; et
d. le séchage du gel obtenu.

8. Procédé selon la revendication 7, **caractérisée en ce que** l'on pyrolyse la pièce moulée en aérogel obtenue.
